# EUROPÄISCHE PATENTSCHRIFT

(11) **EP 2 971 383 B1**
(45) Veröffentlichungstag und Bekanntmachung des Hinweises auf die Patenterteilung: **24.08.2022**
(21) Anmeldenummer: 14728092.9
(22) Anmeldetag: 12.03.2014
(51) Int. Cl.: E03C 1/05, A47K 5/12

(54) **KÜCHENARMATUR**
KITCHEN FITTING
ROBINET DE CUISINE

(30) Priorität: 12.03.2013 DE 202013101071 U
(43) Veröffentlichungstag der Anmeldung: 20.01.2016
(73) Patentinhaber: WWB Sweden AB, 183 51 Täby (SE)
(72) Erfinder: TALSMA, Henk, 14193 Berlin (DE); LANGENDIJK, Rob, 10559 Berlin (DE)
(74) Vertreter: Ernicke, Klaus Stefan
(86) Internationale Anmeldenummer: PCT/EP2014/054892
(87) Internationale Veröffentlichungsnummer: WO 2014/140134

(56) Entgegenhaltungen:
- WO-A1-03/106772
- WO-A1-2006/058650
- WO-A1-2007/073718
- DE-U1-202006 019 652

## Beschreibung

Die Erfindung betrifft eine Küchenarmatur gemäß dem Oberbegriff von Anspruch 1.

Aus der DE 20 2006 019 652 U1 ist eine solche Armatur bekannt. Sie weist eine Auslaufarmatur und eine Fluidversorgung für mehrere in ihrem Zustand ggf. veränderliche Fluide auf. Die Multifunktionsarmatur hat ferner eine Bedieneinrichtung mit einer Steuerung und mit ein oder mehreren damit verbundenen Bedienelementen in Form von manuell und berührungslos betätigbaren optischen Infrarot-Sensoren, die verborgen an einem Armaturenkopf am freien oberen Ende eines Armaturenrohrs der Auslaufarmatur angeordnet sind.

Der Sensor für Wasser ist an der Unterseite des Armaturenkopfs angeordnet und hat einen nach unten gerichteten Wirkbereich. Er ist als Dauerschalter ausgebildet, der die Existenz und Bewegung einer Hand unter einer Auslauföffnung ständig detektiert und signalisiert, wobei die Steuerung den Wasserstrom für die Dauer des anliegenden Schaltersignals fließen lässt und ihn bei Ausbleiben des Schaltersignals nach einer vorbestimmten Zeit eigenständig abschaltet. Ein an der Oberseite des Armaturenkopfs angeordneter Sensor ist als berührungsloser Ein/Aus-Schalter für einen Fluidstrom aus Seife bzw. Desinfektionsmittel ausgebildet und weist einen nach oben gerichteten Wirkbereich auf.

Die WO 2006/058650 A1 lehrt eine ähnliche Multifunktionsarmatur mit einem nach unten gerichteten und als Dauerschalter ausgebildeten Sensor für Wasser.

Die WO 2007/073718 A1 zeigt eine Auslaufarmatur, bei der optische Sensoren im unteren Bereich und an beiden Seiten eines Armaturenrohrs sowie außerhalb der Waschbeckenöffnung angeordnet sind und beidhändig bedient werden.

Die WO 03/106772 A1 befasst sich mit einer Sanitärarmatur, bei der Sensoren getrennt und mit Distanz vom Auslaufrohr in einer Haube eines stationären Armaturenbasisteils angeordnet sind.

Es ist Aufgabe der vorliegenden Erfindung, eine verbesserte Multifunktionsarmatur aufzuzeigen, die für den Kücheneinsatz geeignet ist.

Die Erfindung löst diese Aufgabe mit den Merkmalen im kennzeichnenden Teil von Anspruch 1.

Die beanspruchte Küchenarmatur und das Bedienverfahren haben den Vorteil, dass sie dank des berührungslosen Ein/Aus-Schalters für einen Kücheneinsatz optimal geeignet sind. Die Dauer der Fluidabgabe des Wasserstroms kann durch gezielte Betätigung und insbesondere durch Betätigungsimpulse vom Bediener beliebig gesteuert werden. Das berührungslose Bedienelement wird bei einer Betätigung eingeschaltet und bei einer erneuten Betätigung wieder ausgeschaltet. Die Betätigung kann manuell durch eine Bewegung eines Körperteils, insbesondere einer Hand, in den Wirkbereich des berührungslosen Bedienelements erfolgen.

Das berührungslose Bedienelement ist vorteilhafterweise als berührungsloser Ein/Aus-Schalter, insbesondere als Impulsschalter, ausgebildet. Durch die Bewegung eines Körperteils, insbesondere einer Hand, können Bedienungsimpulse ausgelöst werden.

Der Wasserstrom bleibt nach dem Einschalten unabhängig von der Verweildauer eines Körperteils im Wirkbereich des berührungslosen Ein/Aus-Schalters angeschaltet.

Die Anschaltdauer des Wasserstroms ist im Gegensatz zum Stand der Technik nicht von der Verweildauer des Körperteils im Wirkbereich des berührungslosen Ein/Aus-Schalters abhängig.

Der Bediener kann nach einmaliger Betätigung die Hände aus dem Wirkbereich des Ein/Aus-Schalters entfernen, wobei der eingeschaltete Wasserstrom, bestehen bleibt. Der Bediener kann dann bei laufendem Wasserstrom andere Tätigkeiten in der Küche verrichten. Er kann die Auslaufdauer des Wasserstroms beliebig wählen und beendet sie durch ein erneutes Betätigen des Ein/Aus-Schalters. Diese Ein/Aus-Schaltfunktion und die beliebig wählbare Auslaufdauer ermöglichen das einfache und gezielte Befüllen von Gefäßen, wie Töpfe, Gläser oder Küchenbecken, ohne dass hierzu eine Hand ständig im Wirkbereich des Bedienelements und insbesondere unter einer Auslauföffnung gehalten werden muss. Von den vorbekannten Bedienelementen werden auch nur dauerhaft bewegte Hände, aber nicht die besagten Gefäße als Auslöseereignis erkannt, weshalb die beanspruchte Küchenarmatur für den Kücheneinsatz besser geeignet ist als die vorbekannte Multifunktionsarmatur.

Der berührungslose Ein/Aus-Schalter hat ferner den Vorteil, dass er hinsichtlich seiner Funktion für den Bediener leichter erkennbar und nutzbar ist. Insbesondere kann die Ein/Aus-Schaltfunktion einfacher und besser verstanden und genutzt werden. Der beanspruchte berührungslose Ein/Aus-Schalter hat einen nach oben gerichteten Wirkbereich, was Vorteile für die Ergonomie und die intuitive Erkennung mit sich bringt. Der Ein/AusSchalter ist für Rechtshänder und Linkshänder gleichermaßen gut geeignet und bedienbar. Besondere Vorteile für Bedienbarkeit und Ergonomie ergeben sich durch die

Anordnung des Ein/Aus-Schalters an dem Armaturenkopf am freien oberen Ende des Armaturenrohrs an der Oberseite des Armaturenkopfes.

Der Ein/Aus-Schalter ist als berührungsloser optischer Sensor, ausgebildet. Bevorzugt ist dieser Sensor als Reflexlichttaster im unsichtbaren Lichtbereich, insbesondere im Infrarotlichtbereich, ausgebildet. Für den Einsatz eines solchen optischen Sensors mit einem bevorzugt nach oben gerichteten Wirkbereich ergeben sich durch Fremdlichteinfall, Reflexionen und dergleichen andere im Küchenbereich übliche Lichterscheinungen, Störprobleme. Für deren Behebung ist die den Außenlichteinfall reduzierende Abdeckung und auch das Steuerprogramm zur Unterscheidung von Sensorlicht und von Störlicht vorgesehen . Der beanspruchte optische Sensor kann zielsicher das Sensor- und Signallicht von Fremdlicht unterscheiden, wodurch die Detektions- und Schaltqualität besonders hoch ist.

Der berührungslose Ein/Aus-Schalter kann mit einer Anzeigeeinrichtung zusammenwirken, die eine leicht und intuitiv verständliche Nutzerinformation bereit stellt. Insbesondere kann die Ein/Aus-Schaltfunktion auf besonders einfache Weise durch ein gängiges Symbol signalisiert und verständlich gemacht werden. Das betreffende Anzeigeelement kann dem Benutzer außerdem die Lage und ggf. den Wirkbereich des Ein/Aus-Schalters signalisieren, was ebenfalls eine einfache und intuitive Bedienung ermöglicht und den Benutzer von einem aufwändigen Studium einer Bedienungsanleitung und von Versuchen zum Austesten der Funktion entlastet.

Der berührungslose Ein/Aus-Schalter kann mit ein oder mehreren berührungslosen oder ggf. mit Kontaktberührung zu betätigenden weiteren Bedienelementen kombiniert werden. Er kann insbesondere mit weiteren berührungslosen Bedienelementen zu einer Sensoreinrichtung kombiniert werden, die mit einer entsprechenden Anzeigeeinrichtung ergänzt werden kann. Hierüber können Zusatzfunktionen, wie Temperaturwahl, Auswahl anderer Fluide oder dergleichen geschaltet und gesteuert werden. Die Küchenarmatur kann multifunktional sein und außer Wasser auch andere Fluide, z.B. Spülmittel, Desinfektionsmittel, Pflegelotion oder dergleichen, steuerbar abgeben.

Die Küchenarmatur kann ferner einen Durchflusssteller aufweisen, mit dem die Durchflussmenge bzw. die Stärke des vom Ein/Aus-Schalter geschalteten Fluidstroms gesteuert werden kann. Der Durchflusssteller kann einen mit Berührungskontakt zu bedienenden Handsteller, z.B. einen Drehknopf, aufweisen. Ein solcher Handsteller ist dem Bediener in seiner Funktion von konventionellen mechanischen Küchenarmaturen bekannt und leicht verständlich. Die Kombination von berührungslos zu betätigenden Bedienelementen, insbesondere Sensoren, und einem Handsteller ist eine sehr günstige ergonomische Lösung für den Küchenbereich.

Die beanspruchte Küchenarmatur hat für den Küchenbereich besondere Vorteile. Die Abgabe mehrerer Fluide an einer Auslaufarmatur in Verbindung mit einer entsprechenden Fluidversorgung ist ergonomisch besonders günstig und erspart das bisherige umständliche Hantieren mit verschiedenen Behältern für die zusätzlichen Fluide. Auch die Hygiene wird verbessert. Die berührungslosen Bedienelemente lassen sich besonders schnell und einfach betätigen, wobei sie Dank der Berührungslosigkeit auch einer Verschmutzungsgefahr weniger ausgesetzt sind. Insbesondere muss der Benutzer nicht vor einer Betätigung die Hände waschen. Eine Betätigung ist außerdem mit anderen Körperteilen, insbesondere dem Ellbogen oder dgl. möglich.

Die wichtigsten Funktionen der Küchenarmatur, wie das Ein/Aus-Schalten des Wassers und die eventuellen Zusatzfunktionen, wie Temperaturregelung und Auswahl zusätzlicher Fluide, können an zentraler Stelle ausgelöst und gesteuert werden. Dies vereinfacht deutlich die Handhabung, wobei die Anordnung der Sensoreinrichtung am Armaturenkopf besondere Vorteile für die Erreichbarkeit und die intuitive Bedienung hat. Die Anzeigeeinrichtung unterstützt durch ihre verschiedenen Informationen die leichte Bedienbarkeit und kann außerdem Quittungssignale für eine erfolgreiche Betätigung eines Bedienelements abgeben. Eine Beleuchtung bzw. verschiedene Leuchtelemente sind hierfür von besonderem Vorteil. Außerdem macht eine solche Ausstattung die Küchenarmatur attraktiv in ihrer Erscheinungsform und Nutzbarkeit.

Für die Küchennutzung ist es ferner von Vorteil, wenn das Armaturenrohr beweglich, insbesondere schwenkbar ist. Ggf. kann ein Auszug mit einem beweglichen Schlauchstück vorhanden sein. Ein Griff erleichtert die Handhabung und Bewegung des Armaturenrohrs.

Die beanspruchte Fluidversorgung hat den Vorteil einer platzsparenden und geschützten Unterbringungsmöglichkeit für ein oder mehrere wechselbare Fluidbehälter und für die einfache und sichere Handhabung solcher zusätzlicher Fluide. Auch für die Hygiene ergeben sich besondere Vorteile.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine perspektivische Ansicht einer Kücheneinrichtung mit einer Küchenarmatur,
- Figur 2:: eine perspektivische Frontansicht der Küchenarmatur von Figur 1,
- Figur 3:: eine vergrößerte Frontansicht des Armaturenkopfes der Küchenarmatur von Figur 1 und 2,
- Figur 4:: eine Seitenansicht der Kücheinrichtung von Figur 1 und
- Figur 5 und 6:: eine Variante der Küchenarmatur in verschiedenen Ansichten.

Die Erfindung betrifft eine Küchenarmatur (1) und eine Kücheneinrichtung (4) mit einer solchen Küchenarmatur (1). Die Erfindung betrifft ferner ein Bedienverfahren für eine Küchenarmatur (1).

Die Küchenarmatur (1) ist speziell für den Kücheneinsatz geeignet. Sie bildet andererseits aber auch eine Multifunktionsarmatur, die in anderen Einsatzbereichen genutzt werden kann. Entsprechendes gilt für das Bedienverfahren.

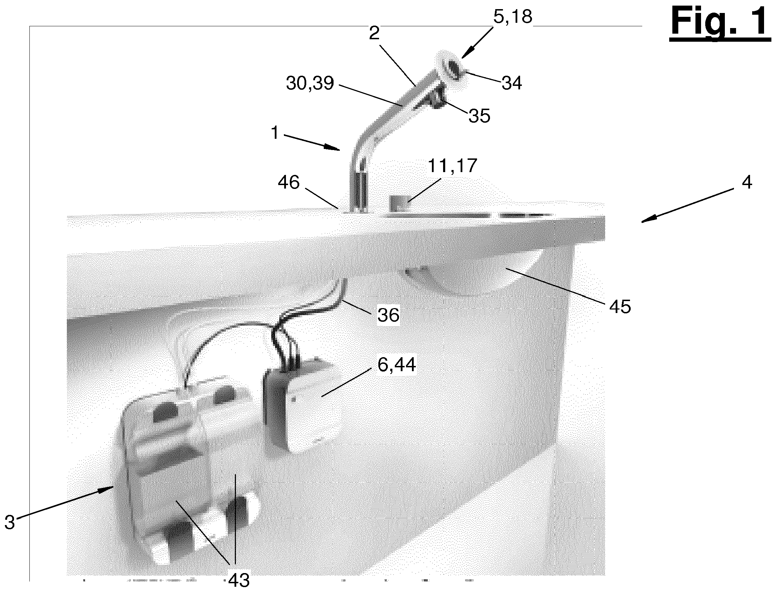

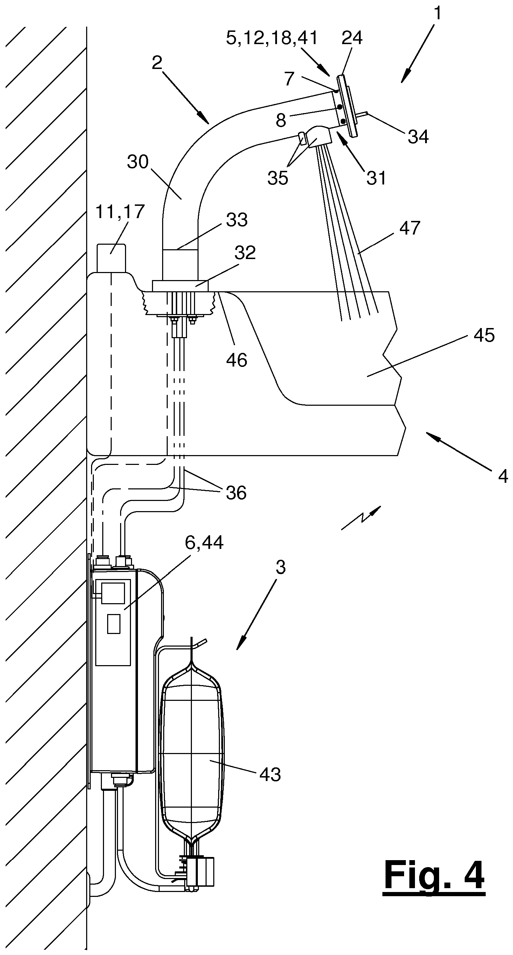

Figur 1 und 4 zeigen eine solche Kücheneinrichtung (4) mit einer Küchenarmatur (1). Die Kücheneinrichtung (4) weist ein Küchenbecken (45), z.B. ein Spülbecken, auf, dass in einer entsprechenden Halterung, insbesondere in einem Küchenschrank oder dergleichen eingebaut ist. Die Küchenarmatur (1) weist eine Auslaufarmatur (2) und eine Fluidversorgung (3) für ein oder mehrere Fluide auf. Die Auslaufarmatur (2) ist nahe des Beckens (45), z.B. am Beckenrand (46) oder an einer Konsole, montiert, wobei der Auslassrichtung der Fluide in das Becken (45) gerichtet ist.

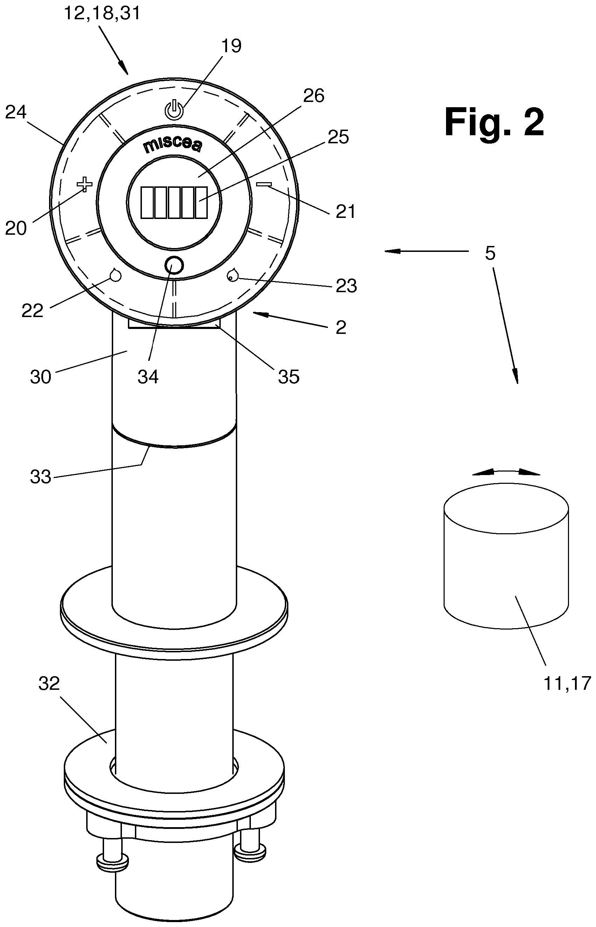

Figur 1 bis 4 und 5, 6 zeigen zwei Varianten der Küchenarmatur (1).

In beiden Varianten weist die Auslaufarmatur (2) ein Armaturenrohr (30) auf, das vorzugsweise eine gebogene Form aufweist und am unteren bzw. rückwärtigen Ende mit einem Armaturenfuß (32) am Beckenrand oder einer Konsole (46) befestigt ist. Am oberen freien Ende des Armaturenrohrs (30) befindet sich ein Armaturenkopf (31), der eine Sensoreinrichtung (12) und eine Anzeigeeinrichtung (18) aufnimmt. Das Armaturenrohr (30) kann starr oder beweglich, insbesondere schwenkbar sein. Zu diesem Zweck kann es im unteren Bereich ein Gelenk (33) aufweisen, das z.B. als Drehlager ausgebildet ist. Am Armaturenkopf (31) kann ein Griff (34), z.B. in Form eines frontal abstehenden Stiftes oder dgl., angeordnet sein, mit dem das Armaturenrohr (30) geschwenkt werden kann. Am oberen Endbereich des Armaturenrohrs (30) befinden sich ein oder mehrere Auslauföffnungen (35) für jeweils ein Fluid I, II, III. Die vorgenannte Ausbildung der Auslaufarmatur (2) kann in beiden Varianten die gleiche sein, wobei der Griff (34) ggf. auch entfallen oder in anderer Weise ausgebildet und angeordnet sein kann.

Die Küchenarmatur (1) weist eine Bedieneinrichtung (5) mit einer Steuerung (6) und mit ein oder mehreren Bedienelementen (7 bis 11) auf, die mit der Steuerung (6) verbunden sind. Zumindest ein Teil der Bedienelement (7 bis 10) wird berührungslos betätigt und weist hierfür jeweils mindestens einen Sensor (13,14) auf. Mehrere dieser Sensoren (13,14) können zu der besagten Sensoreinrichtung (12) kombiniert sein. Die Bedieneinrichtung (5) kann auch ein oder mehrere mit Berührungskontakt zu betätigende Bedienelemente (11) aufweisen. Die Bedienung kann in beiden Fällen mit einem menschlichen Körperteil, insbesondere einer Hand, erfolgen.

Die Steuerung (6) kann in der gezeigten Ausführungsform von Figur 1 und 4 in einem separatem Gehäuse getrennt von der Auslaufarmatur (2) angeordnet und z.B. unter der Konsole (46) platziert sein. Die Steuerung (6) oder ein Teil davon, z.B. eine Steuerplatine (40) kann auch in der nachfolgend erläuterten Weise am Armaturenkopf (31) angeordnet sein. Die Steuerung (6) weist eine Recheneinheit mit ein oder mehreren Mikroprozessoren bzw. Mikrocontrolern, Speichern für Daten und Programme und Schnittstellen für die Ein- und Ausgabe von Daten auf. In der Steuerung (6) sind ein oder mehrere Steuerprogramme gespeichert.

Die Fluidversorgung (3) ist mit der Auslaufarmatur (2) über eine oder mehrere Fluidleitungen (36) verbunden und gibt ein oder mehrere Fluide I, II, III ab. Die Abgabe erfolgt in einem oder mehrere Fluidströmen (47). Zumindest ein Fluid I ist Wasser. In den gezeigten Ausführungsformen können ein oder zwei weitere Fluide II,III, z.B. ein Geschirrspülmittel, ein Desinfektionsmittel, eine Pflegelotion oder dergleichen über mehrere Auslauföffnungen (35) abgegeben werden. Das oder die Fluid(e) I,II,III können ggf. in ihrem Zustand verändert werden. Eine solche Veränderung kann z.B. eine Temperaturregelung des Fluids I Wasser sein. Alternativ oder zusätzlich lässt sich auch die Stärke oder Durchflussmenge eines Fluidstroms (47), insbesondere des Wasserstroms, einstellen und ggf. regeln.

Ein Bedienelement (7) schaltet bei einer Betätigung einen Wasserstrom (47) ein und schaltet ihn bei einer erneuten Betätigung wieder aus. Der Wasserstrom (47) bleibt nach dem Einschalten unabhängig von der Verweildauer eines Körperteils im Wirkbereich (15) des Bedienelement (7) angeschaltet. Das Bedienelement (7) ist als berührungslos zu betätigender Ein/Aus-Schalter für einen Fluidstrom I, nämlich den Wasserstrom, ausgebildet.

Der berührungslose Ein/Aus-Schalter (7) ist mit der Steuerung (6) in geeigneter Weise über eine Leitung oder über eine drahtlose Kommunikation verbunden und schaltet mittels der Steuerung (6) bei einer Betätigung den Wasserstrom (47) ein und bei einer erneuten Betätigung wieder aus. Der Ein/Aus-Schalter (7) kann als Impulsschalter ausgebildet sein, der bei Betätigung einen Schaltimpuls an die Steuerung (6) ausgibt, die ihrerseits ein entsprechendes Fluidventil (37), z.B. ein Magnetventil, in einer Fluidleitung (36) beschaltet.

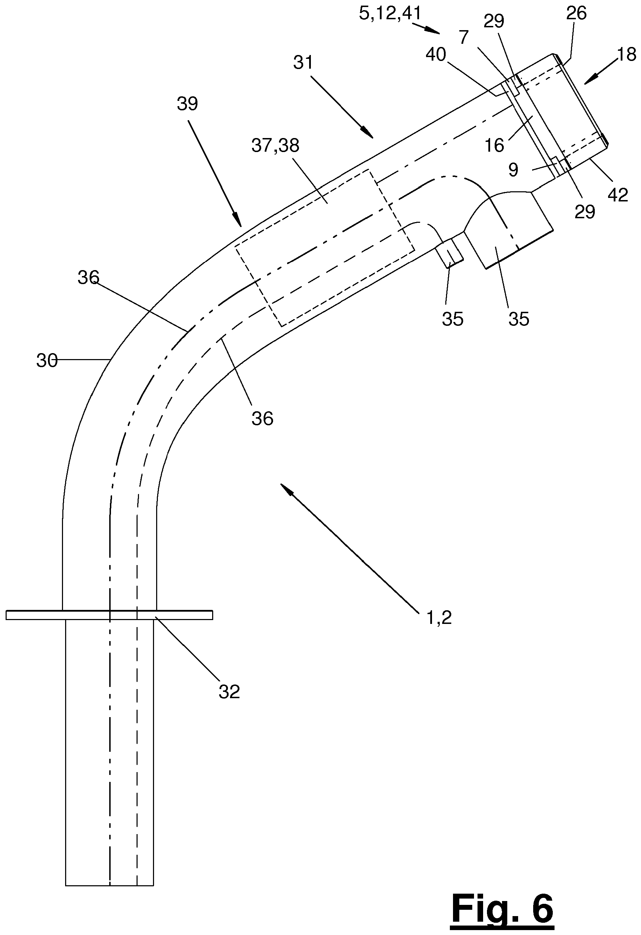

Das Fluidventil (37) kann an einer beliebig geeigneten Stelle angeordnet sein. In der zweiten Variante ist eine Einbaumöglichkeit im Armaturenrohr (30), insbesondere in dessen oberen und mit einer konischen Erweiterung (39) versehenen Bereich gezeigt. Das Fluidventil (37) kann ggf. mit einem Verteiler (38) für den Anschluss von mehreren Fluidleitungen (36) und deren Verteilung und Zuführung zu den Auslauföffnungen (35) verbunden sein. Die in Figur 6 gezeigten Einheit (37,38) kann vom oberen offenen Rohrende her eingesetzt und im Armaturenrohr (30) montiert werden.

Das vom berührungslosen Ein/Aus-Schalter (7) und der Steuerung (6) beaufschlagte Fluidventil (37) hat eine Sperr- und Öffnungsfunktion für den Fluiddurchlass. Es kann sich hierauf beschränken und als Sperrventil ausgebildet sein. Falls eine Durchflussmengensteuerung vorhanden ist, kann das vorgenannte Fluidventil (37) hierfür entsprechend ausgebildet und adaptiert sein. Alternativ kann ein zusätzliches Steuerventil in der betreffenden Fluidleitung (36) angeordnet sein.

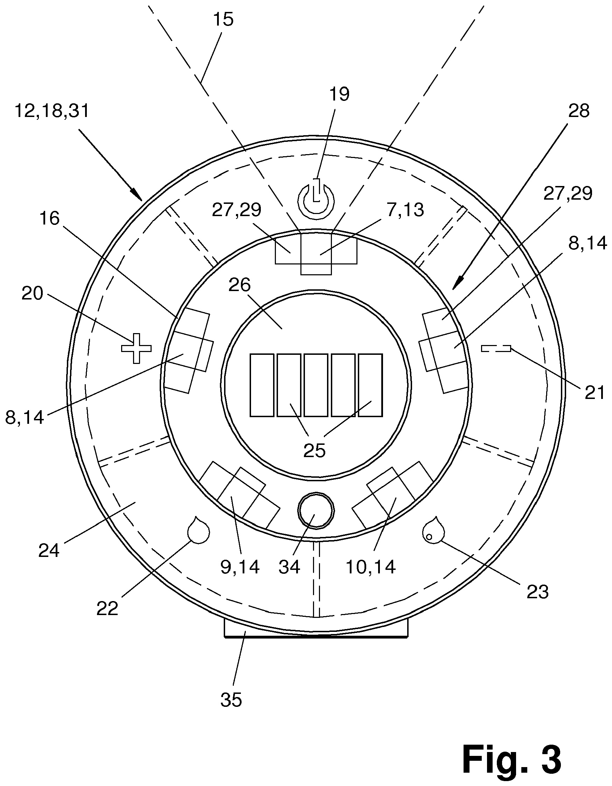

Das Bedienelement (7) in Form des berührungslosen Ein/Aus-Schalters hat einen nach oben gerichteten Wirkbereich (15), der in Figur 3 durch eine gestrichelte Linie angedeutet ist. Der Ein/Aus-Schalter (7) kann durch ein Körperteil einer Bedienperson berührungslos betätigt werden.

Der berührungslose Ein/Aus-Schalter (7) weist einen optischen Sensor (13) auf, der z.B. als Reflexlichttaster ausgebildet ist und vorzugsweise im nicht sichtbaren Lichtbereich, insbesondere im Infrarotbereich, arbeitet. Der Reflexlichttaster sendet über ein Sensorteil einen Lichtstrahl im Wirkbereich (15) aus, der beim Auftreffen auf ein Körperteil von diesem reflektiert und von einem Sensorteil empfangen wird. Die Empfängersignale werden in der Steuerung (6) ausgewertet und bei Erkennen eines Körperteils als Auslöse- oder Betätigungssignal erkannt und genutzt.

Der optische Sensor (13) weist eine in Figur 3, 5 und 6 gezeigte äußere Abdeckung (16) auf, die das Signal- und Reflexlicht des Sensors (13) durchlässt und den Auslichteinfall reduziert oder sperrt. Die Abdeckung (16) kann auch für andere berührungslose Bedienelemente (8,9,10) vorhanden und als Ring ausgebildet sein. Sie kann ein filterndes Material, z.B. ein Kunststoffmaterial, aufweisen, welches für Lichtstrahlen im sichtbaren Bereich teilweise oder vollständig undurchlässig ist.

Die Steuerung (6) weist ein Programm auf, welches die Sensorsignale auswertet und dabei eine Unterscheidung nach Sensorlicht bzw. Signallicht einerseits und Störlicht andererseits trifft. Durch den nach oben gerichteten Wirkbereich (15) und die Anordnung der Auslaufarmatur (2) im üblicherweise gut beleuchteten Küchenbereich ist der Fremd- und Störlichteinfall relativ groß und in der Regel stärker als bei anderen Anordnungen und Ausrichtungen eines Sensors.

In beiden gezeigten Varianten ist der berührungslose Ein/Aus-Schalter (7) am Armaturenrohr (30) angeordnet. Er befindet sich dabei an dem am freien oberen Ende des Armaturenrohrs (30) angeordneten Armaturenkopf (31). Der berührungslose Ein/Aus-Schalter (7) ist Bestandteil der eingangsgenannten Sensoreinrichtung (12).

Die Bedieneinrichtung (5) kann ein oder mehrere weitere berührungslose Bedienelemente (8,9,10) für die Beeinflussung von einem oder mehreren Fluiden I,II,III aufweisen. In der ersten Variante von Figur 1 bis 4 sind drei weitere berührungslose Bedienelemente (8,9,10) vorhanden. Die berührungslosen Bedienelementen (7,8,9,10) haben unterschiedlich gerichtete Wirkbereiche (15) und können z.B. als Temperaturstellung und/oder als Wählschalter für ein oder mehrere weitere Fluide II,III ausgebildet sein. Die Bedienelemente (8,9,10) weisen ebenfalls einen Sensor (14) der vorbeschriebenen Art, insbesondere einen Reflexlichttaster im Infrarotbereich, auf.

In der ersten Variante sind gemäß Figur 3 links und rechts vom oberen Sensor (13) benachbart zwei Sensoren (14) mit seitlichen und entgegengesetzten Wirkbereichen vorhanden, die als Temperatursteller (8) zur Temperaturerhöhung oder -minderung eines Fluids, vorzugsweise von Wasser, dienen. Im unteren Bereich der Sensoreinrichtung (12) sind zwei weitere Bedienelemente (9,10) und Sensoren (14) zur Auswahl von zwei weiteren Fluiden II,III der eingangs genannten Art vorhanden.

Die Sensoreinrichtung (12) weist somit in der ersten Variante z.B. fünf gleichmäßig am z.B. kreisrunden Mantel des Armaturenkopfes (31) verteilte Sensoren (13,14) auf. Die Zahl und Anordnung der Bedienelemente (8,9,10) und deren Sensoren (14) kann in einer anderen Ausführungsform geändert sein.

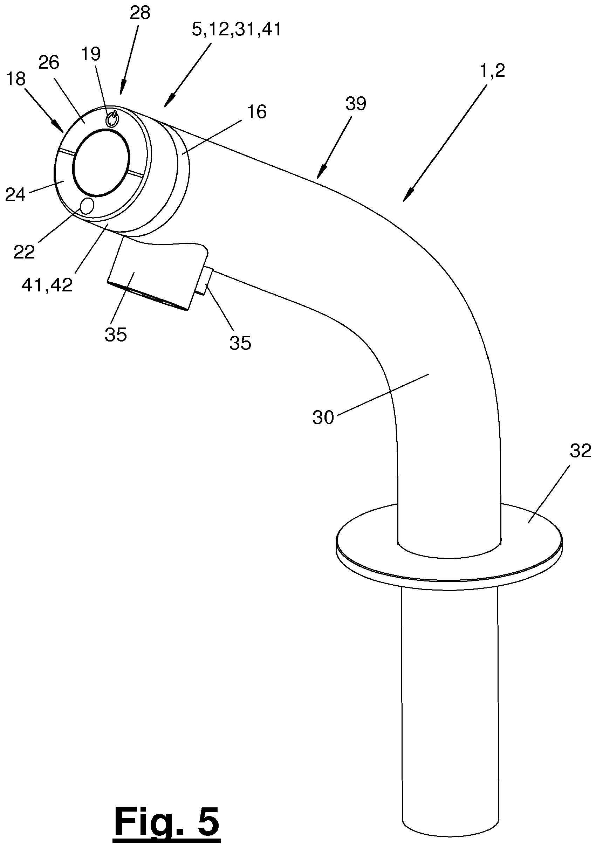

In der zweiten Variante von Figur 5 und 6 sind z.B. nur zwei berührungslose Bedienelemente (7,9) vorhanden, die diametral zur Zentralachse des Armaturenrohrs (30) bzw. des Armaturenkopfes (31) angeordnet und entgegengesetzt ausgerichtet sind. Dies sind zum einen ein berührungsloser Ein/Aus-Schalter (7) und ein Wählschalter (9) für ein weiteres Fluid II, z.B. ein Geschirrspülmittel. Ein Temperatursteller fehlt in dieser Ausführungsform, wobei eine Temperaturbeeinflussung des Wassers entfallen oder auf andere Weise erreicht werden kann.

In weiteren nicht dargestellten Varianten können andere beliebige Kombinationen der berührungslosen Bedienelemente (7 bis 10) vorhanden sein, wobei z.B. nur der berührungslose Ein/Aus-Schalter (7) oder eine Kombination dieses Schalters (7) mit einem oder zwei Wählschaltern (9,10) für ein oder zwei weitere Fluide (II,III) vorhanden ist. Solche Kombinationen können mit und ohne Temperatursteller (8) ausgerüstet sein. Ferner ist es möglich, den berührungslosen Ein/Aus-Schalter (7) nur mit einem Temperatursteller (8) zu kombinieren. Die Anzeigeeinrichtung (18) ist entsprechend an die o.g. alternativen Kombinationen angepasst.

Die Bedieneinrichtung (5) weist außerdem eine Anzeigeeinrichtung (18) mit ein oder mehreren Anzeigeelementen (19 - 27) auf, die insbesondere den ein oder mehreren Bedienelementen (7 - 10) zugeordnet sind. Für die Ausbildung und Anordnung der Anzeigeeinrichtung (18) zeigen die beiden Variante unterschiedliche Ausführungen. Die Anzeigeeinrichtung (18) kann auch entsprechend an die anderen vorerwähnten Varianten und Kombinationen von Bedienelementen (7 bis 10) angepasst sein.

In den verschiedenen Ausführungsbeispiel zeigt ein Anzeigeelement (19) für den berührunglosen Ein/AusSchalter (7) dessen Lage und Funktion an. Es kann dabei dem betreffenden Schalter (7) oder Sensor (13) in der räumlichen Lage zugeordnet sein und kann sich insbesondere am Wirkbereich (15) befinden. Zur Verdeutlichung der Schalterfunktion kann das Anzeigeelement (19) ein entsprechendes Symbol aufweisen, z.B. den gezeigte unterbrochenen Kreis mit dem in der Unterbrechung angeordneten Strich.

Die evtl. vorhandenen ein oder mehreren weiteren berührungslosen Bedienelemente (8,9,10) können entsprechende Anzeigeelemente (20,21,22,23) aufweisen, die z.B. in der ersten Variante gemäß Figur 3 als "+"- und "-"-Zeichen und als z.B. tropfenförmige Fluidsymbole ausgebildet sind.

In der ersten Variante sind die Anzeigeelemente (19 - 23) an einem gemeinsamen Anzeigenträger (24) angeordnet, der z.B. als radial ausgerichtete und vorn am Armaturenkopf (31) angeordnete Ringscheibe ausgebildet ist, die z.B. aus einem transparentem Material besteht. Die Anzeigeelemente (19 - 23) können z.B. Beschriftungen auf der Ringscheibe sein. Die anderen Anzeigeelemente (20 - 23) sind ebenfalls den jeweiligen Bedienelementen (8,9,10) zugeordnet und signalisieren deren Lage und Funktion.

Die Anzeigeeinrichtung (18) kann weitere Anzeigeelemente (25,27) aufweisen, die Stellwerte und/oder Quittungssignale signalisieren. Wenn ein Temperatursteller (8) vorhanden ist, kann z.B. ein Anzeigeelement (25) den eingestellten Temperaturwert optisch und/oder akustisch signalisieren. Es kann den Wert z.B. als Zahl oder mit eine oder mehreren Blocksymbolen, z.B. beleuchteten Farbstreifen, anzeigen. Das Anzeigeelement (25) kann hierfür z.B. gemäß Figur 3 von einer LED-Reihe gebildet werden, die einen Farbwechsel von blau auf rot anzeigen. Das Anzeigeelement (35) kann einem geeigneten Anzeigenträger (26) angeordnet sein. Dies kann z.B. ein Display oder dgl. an der Frontseite des Armaturenkopfes (31) sein. Die Anzeigenträger (24,26) können konzentrisch angeordnet sein.

Ein oder mehrere weitere Anzeigeelemente (27) können eine Bestätigung oder Quittung für die erfolgreiche Sensorbetätigung (13,14) signalisieren. Dies kann ebenfalls optisch und/oder akustisch erfolgen. Die Anzeigeeinrichtung (18) kann z.B. eine Beleuchtung (28) mit mehreren Leuchtelementen (29) aufweisen, die jeweils den Sensoren (13,14) zugeordnet sind und bei erfolgreicher Auslösung oder Befehlseingabe aufleuchten und dabei auch das zugehörige Anzeigeelement (19 - 23) beleuchten und sichtbar machen oder hervorheben. Die Leuchtelemente (29) sind in der Nähe der Sensoren (13,14) angeordnet und können z.B. als LEDs ausgebildet sein. Die Anzeigeeinrichtung (18) kann außerdem eine allgemeine Beleuchtung (28) aufweisen, die dekorativen oder anderen Zwecken dienen kann und die von den besagten Leuchtelementen (29) und/oder anderen Leuchtelementen gebildet werden kann.

In einer anderen Ausführung können die Anzeigeelemente (19 - 23) selbstleuchtend sein und können z.B. von einer LED-Matrix oder dgl. gebildet werden. Sie können zudem variabel sein und veränderliche Bedeutungsinhalte anzeigen.

Die Sensoreinrichtung (12) und die Anzeigeeinrichtung (18) sind gemeinsam am Armaturenkopf (31) angeordnet, wobei die Anzeigenträger (24,26) in Rohrrichtung schützend vor den berührungslosen Bedienelementen (7 - 10) angeordnet sein können. Die Bedienelemente (7 - 10) und die Sensoren (13,14) können z.B. auf einer gemeinsamen Steuerplatine (40) angeordnet sein, an der auch die Leuchtelemente (29) angeordnet sind. Diese Anordnung kann von einem gemeinsamen Gehäuse (42) und der Abdeckung (16) dicht und schützend umgeben sein. Figur 6 zeigt beispielhaft diese Anordnung, die auch bei der ersten Variante eingesetzt werden kann.

In der zweiten Variante sind die Anzeigeelemente (19,22) für den Ein/Aus-Schalter (7) und den Wählschalter (9) an der Frontseite eines lichtdurchlässigen und von hinten beleuchteten Gehäuses (42) angeordnet. Diese Frontseite bildet den Anzeigenträger (24). Auf den in der ersten Variante vorhandenen Anzeigenträger (26) und ein Anzeigeelement (25) für den Temperaturwert oder dgl. wird in der zweiten Variante z.B. verzichtet.

Die Bedieneinrichtung (5) kann in beiden Varianten als weiteres Bedienelement (11) einen Durchflusssteller zur Einstellung der Stärke oder Durchflussmenge des vom berührungslosen Ein/Aus-Schalters (7) geschalteten Wasserstroms (47) aufweisen. Der Durchflusssteller (11) ist z.B. getrennt vom berührungslosen Ein/Aus-Schalter (7) angeordnet und kann sich neben dem Armaturenrohr (30) an der Konsole (46) befinden. Der Durchflusssteller (11) kann ggf. mit einem eigenen weiteren Anzeigeelement (nicht dargestellt) oder mit einer entsprechend adaptierten Anzeigevorrichtung (18) verbunden sein.

In einer bevorzugten Ausführungsform sind zumindest die zwei besagten Bedienelemente oder Schalter (7,11) vorhanden. Ein oder mehrere weitere Bedienelemente (8 - 10) können ggf. zusätzlich vorhanden sein.

Der Durchflussteller (11) kann ebenfalls berührungslos betätigbar sein. In der gezeigten Ausführungsform ist er als per Kontakt zu betätigender Handsteller, z.B. als Drehknopf, Schieber oder dgl., ausgebildet. Der Durchflusssteller (11) ist mit einem mechanisch steuerbaren oder fernsteuerbaren Fluidventil, insbesondere einem Steuerventil verbunden. Dies kann in das eingangs erwähnte und vorhandene Fluidventil (37) oder ein zusätzliches Fluidventil sein.

In einer einfachen mechanischen Variante wird ein separates Fluidventil auf rein mechanischem Weg und nur durch den Durchflussteller (11) eingestellt. In einer anderen Ausführungsform kann das Fluidventil fernsteuerbar sein, wobei der Durchflusssteller (11) eine Overrun-Funktion hat. Das Steuerventil kann dann einen weiteren Antrieb, z.B. einen mit der Steuerung (6) verbundenen Elektroantrieb, aufweisen. Hierdurch kann eine vorprogrammierte Strahlstärke oder Durchflussmenge voreingestellt werden, die bei Betätigung des Ein/Aus-Schalters (7) wirksam wird. Diese Voreinstellung kann mit dem Handsteller (17) abgeändert werden, wobei diese Änderung vorzugsweise nur während der Einschaltdauer des betreffenden Wasserstroms (47) wirksam ist.

Die in Figur 1 und 4 gezeigte Fluidversorgung (3) kann in beliebig geeigneter Weise ausgebildet sein. Sie ist mit einer Zulaufleitung für Kaltwasser oder einer Doppelleitung für Kalt- und Warmwasser verbunden. Sie kann ferner ein oder mehrere Fluidbehälter (43) für die besagten ein oder mehreren zusätzlichen Fluide II,III aufweisen. Die Fluidbehälter (43) können wechselbar und z.B. als Beutel ausgebildet sein. Sie können über entsprechende Anschlüsse an der Auslassstelle fluiddicht mit der Fördereinrichtung (44) verbunden sein. Die Fluidversorgung (3) kann z.B. gemäß der WO 2008/077619 A ausgebildet sein.

Die weiteren Bedienelemente (8 bis 11) können in beliebiger Zahl und Kombination vorhanden sein oder auch entfallen. Sie können auch an anderen Stellen der Küchenarmatur (1), insbesondere der Auslaufarmatur (2), angeordnet sein. Der Durchflusssteller (11) kann ebenfalls als berührungslos zu betätigendes Bedienelement ausgeführt sein. Er kann auch in die Sensoreinrichtung (12) integriert sein. Ferner kann die Küchen- oder Multifunktionsarmatur (1) Zusatzeinrichtungen (nicht dargestellt) aufweisen, z.B. ein Lesegerät, ein Verwaltungsprogramm oder dgl.. Diese Ausbildung kann wie in der DE 10 2006 062 182 A1 sein.

### BEZUGSZEICHENLISTE

- 1: Küchenarmatur, Multifunktionsarmatur
- 2: Auslaufarmatur
- 3: Fluidversorgung
- 4: Kücheneinrichtung
- 5: Bedieneinrichtung
- 6: Steuerung
- 7: Bedienelement, Ein/Aus-Schalter Fluid I
- 8: Bedienelement, Temperatursteller Fluid I
- 9: Bedienelement, Wählschalter Fluid II
- 10: Bedienelement, Wählschalter Fluid III
- 11: Bedienelement, Durchflusssteller
- 12: Sensoreinrichtung
- 13: Sensor Ein/Aus
- 14: Sensor
- 15: Wirkbereich
- 16: Abdeckung, Abdeckring
- 17: Handsteller, Drehknopf
- 18: Anzeigeeinrichtung
- 19: Anzeigeelement, Funktion, Ein/Aus Fluid I
- 20: Anzeigeelement, Funktion, Temperaturwahl
- 21: Anzeigeelement, Funktion, Temperaturwahl
- 22: Anzeigeelement, Funktion, Fluid II
- 23: Anzeigeelement, Funktion, Fluid III
- 24: Anzeigenträger, Ringscheibe
- 25: Anzeigeelement, Temperaturwert
- 26: Anzeigenträger, Display
- 27: Anzeigeelement, Quittungssignal
- 28: Beleuchtung
- 29: Leuchtelement
- 30: Armaturenrohr
- 31: Armaturenkopf
- 32: Armaturenfuß
- 33: Gelenk, Drehlager
- 34: Griff
- 35: Auslauföffnung
- 36: Fluidleitung
- 37: Fluidventil, Magnetventil
- 38: Verteiler
- 39: Erweiterung Armaturenrohr
- 40: Steuerplatine
- 41: Baueinheit
- 42: Gehäuse
- 43: Fluidbehälter
- 44: Fördereinrichtung, Pumpeinrichtung
- 45: Becken, Küchenbecken
- 46: Beckenrand, Konsole
- 47: Fluidstrom, Wasserstrom

## Patentansprüche

1. Küchenarmatur mit einer Auslaufarmatur (2) und einer Fluidversorgung (3) für ein oder mehrere Fluide und mit einer Bedieneinrichtung (5), die eine Steuerung (6) und ein oder mehrere damit verbundene Bedienelemente (7-11) aufweist, wobei ein Bedienelement (7) als berührungsloser Ein/AusSchalter für einen Fluidstrom (47) ausgebildet ist, wobei der berührungslose Ein/Aus-Schalter (7) bei einer Betätigung den Fluidstrom (47) einschaltet und bei einer erneuten Betätigung den Fluidstrom wieder ausschaltet, wobei der berührungslose Ein/AusSchalter (7) als manuell und berührungslos betätigbarer optischer Sensor (13) ausgebildet ist, wobei der berührungslose Ein/Aus-Schalter (7) an der Oberseite eines Armaturenkopfs (31) am freien oberen Ende eines Armaturenrohrs (30) der Auslaufarmatur (2) angeordnet ist,
wobei der berührungslose Ein/Aus-Schalter (7) einen nach oben gerichteten Wirkbereich (15) aufweist, wobei der optische Sensor (13) eine den Außenlichteinfall reduzierende Abdeckung (16) aufweist und die Steuerung (6) ein Programm zur Unterscheidung von Sensorlicht und von Störlicht aufweist, **dadurch gekennzeichnet, dass** das Bedienelement (7) als berührungsloser Ein/AusSchalter für einen aus der Küchenarmatur (1) auslaufenden Wasserstrom ausgebildet ist.

2. Küchenarmatur nach Anspruch 1, **dadurch gekennzeichnet, dass** der berührungslose Ein/Aus-Schalter (7) als Infrarot-Reflexlichttaster und als Impulsschalter ausgebildet ist.

3. Küchenarmatur nach Anspruch 1 oder 2, **dadurch gekennzeichnet, dass** die Bedieneinrichtung (5) ein oder mehrere weitere berührungslose Bedienelemente (8,9,10) für die Beeinflussung von einem oder mehreren Fluiden aufweist.

4. Küchenarmatur nach Anspruch 3, **dadurch gekennzeichnet, dass** die ein oder mehreren weiteren berührungslosen Bedienelemente (8,9,10) als Temperatursteller und/oder als Wählschalter für ein weiteres Fluid ausgebildet sind.

5. Küchenarmatur nach Anspruch 3 oder 4, **dadurch gekennzeichnet, dass** der berührungslose Ein/Aus-Schalter (7) und die ein oder mehreren weiteren berührungslosen Bedienelemente (8,9,10) zu einer Sensoreinrichtung (12) zusammengefasst und gemeinsam am Armaturenkopf (31) angeordnet sind.

6. Küchenarmatur nach Anspruch 3, 4 oder 5, **dadurch gekennzeichnet, dass** der berührungslose Ein/Aus-Schalter (7) und die ein oder mehreren weiteren berührungslosen Bedienelemente (8,9,10) unterschiedlich gerichtete Wirkbereiche (15) aufweisen.

7. Küchenarmatur nach einem der vorhergehenden Ansprüche, **dadurch gekennzeichnet, dass** die Bedieneinrichtung (5) eine Anzeigeeinrichtung (18) mit einem Anzeigeelement (19,27) für den berührungslosen Ein/Aus-Schalter (7) und bevorzugt weitere Anzeigeelemente (20-27) für die ein oder mehreren weiteren berührungslosen Bedienelemente (8,9,10) aufweist.

8. Küchenarmatur nach Anspruch 7, **dadurch gekennzeichnet, dass** das Anzeigeelement (19) für den berührungslosen Ein/Aus-Schalter (7) dessen Lage und Funktion anzeigt und ein Anzeigeelement (27) ein Quittungssignal für die erfolgte Betätigung des berührungslosen Ein/AusSchalter (7) abgibt.

9. Küchenarmatur nach Anspruch 5 und 7, **dadurch gekennzeichnet, dass** die Sensoreinrichtung (12) und die Anzeigeeinrichtung (18) gemeinsam am Armaturenkopf (31) angeordnet sind.

10. Küchenarmatur nach einem der vorhergehenden Ansprüche, **dadurch gekennzeichnet, dass** ein weiteres Bedienelement (11) als Durchflusssteller zur Einstellung der Stärke des vom berührungslosen Ein/Aus-Schalter (7) geschalteten Fluidstroms (47) ausgebildet ist.

11. Küchenarmatur nach einem der vorhergehenden Ansprüche, **dadurch gekennzeichnet, dass** am oberen Endbereich des Armaturenrohrs (30) ein oder mehrere Auslauföffnungen (35) für jeweils ein Fluid I, II, III angeordnet sind.

12. Küchenarmatur nach einem der vorhergehenden Ansprüche, **dadurch gekennzeichnet, dass** das Armaturenrohr (30) beweglich, insbesondere schwenkbar ausgebildet ist und ein Gelenk (33), insbesondere ein Drehlager, sowie bevorzugt einen Griff (34) aufweist.

13. Küchenarmatur nach einem der vorhergehenden Ansprüche, **dadurch gekennzeichnet, dass** ein Fluidventil (37) und/oder ein Verteiler (38) für mehrere Fluide im Armaturenrohr (30), insbesondere in einer konischen Erweiterung (39) des Armaturenrohrs (30) angeordnet sind.

14. Küchenarmatur nach einem der vorhergehenden Ansprüche, **dadurch gekennzeichnet, dass** die Fluidversorgung (3) eine Fördereinrichtung (44) mit einer oder mehreren Fluidleitungen (36) und einen oder mehrere wechselbare Fluidbehälter (43) für weitere Fluide, insbesondere Spülmittel, Desinfektionsmittel, Pflegelotion oder dgl. aufweist.

15. Kücheneinrichtung mit einem Küchenbecken (45) und mit einer am Beckenrand (46) angeordneten Küchenarmatur (1), die eine Auslaufarmatur (2) und eine Fluidversorgung (3) für ein oder mehrere Fluide sowie eine Bedieneinrichtung (5) mit einer Steuerung (6) und mit einem oder mehreren damit verbundenen Bedienelementen (7-11) aufweist, **dadurch gekennzeichnet, dass** die Küchenarmatur (1) nach mindestens einem der Ansprüche 1 bis 14 ausgebildet ist.

## Claims

1. Kitchen fitting having an outlet fitting (2) and a fluid supply (3) for one or more fluids and having an operator control unit (5) which has a controller (6) and one or more operator control elements (7-11) connected to said controller, wherein one operator control element (7) is designed as a non-contact on/off switch for a flow of fluid (47), wherein the non-contact on/off switch (7) switches on the flow of fluid (47) when actuated and switches off the flow of fluid again when actuated again, wherein the non-contact on/off switch (7) is designed as an optical sensor (13) which can be actuated manually and without contact, wherein the non-contact on/off switch (7) is arranged on the top side of a fitting head (31) at the free upper end of a fitting pipe (30) of the outlet fitting (2), wherein the non-contact on/off switch (7) has an upwardly directed region of action (15), wherein the optical sensor (13) has a cover (16) that reduces the incidence of external light and the controller (6) has a program for distinguishing between sensor light and stray light, **characterized in that** the operator control element (7) is designed as a non-contact on/off switch for a flow of water being outlet from the kitchen fitting (1).

2. Kitchen fitting according to Claim 1, **characterized in that** the non-contact on/off switch (7) is designed as an infrared diffuse reflection sensor and as a pulse switch.

3. Kitchen fitting according to Claim 1 or 2, **characterized in that** the operator control device (5) has one or more further non-contact operator control elements (8, 9, 10) for influencing one or more fluids.

4. Kitchen fitting according to Claim 3, **characterized in that** the one or more further non-contact operator control elements (8, 9, 10) are designed as temperature adjusters and/or as selector switches for a further fluid.

5. Kitchen fitting according to Claim 3 or 4, **characterized in that** the non-contact on/off switch (7) and the one or more further non-contact operator control elements (8, 9, 10) are combined to form a sensor device (12) and are arranged together on the fitting head (31).

6. Kitchen fitting according to Claim 3, 4 or 5, **characterized in that** the non-contact on/off switch (7) and the one or more further non-contact operator control elements (8, 9, 10) have regions of action (15) with different directions.

7. Kitchen fitting according to one of the preceding claims, **characterized in that** the operator control device (5) has a display device (18) with a display element (19, 27) for the non-contact on/off switch (7) and preferably further display elements (20-27) for the one or more further non-contact operator control elements (8, 9, 10).

8. Kitchen fitting according to Claim 7, **characterized in that** the display element (19) for the non-contact on/off switch (7) displays the position and function of said switch and a display element (27) outputs an acknowledgement signal for the performed actuation of the non-contact on/off switch (7).

9. Kitchen fitting according to Claims 5 and 7, **characterized in that** the sensor device (12) and the display device (18) are arranged together on the fitting head (31).

10. Kitchen fitting according to one of the preceding claims, **characterized in that** a further operator control element (11) is designed as a throughflow adjuster for adjusting the intensity of the flow of fluid (47) switched by the non-contact on/off switch (7).

11. Kitchen fitting according to one of the preceding claims, **characterized in that** one or more outlet openings (35) for in each case one fluid I, II, III are arranged at the upper end region of the fitting pipe (30).

12. Kitchen fitting according to one of the preceding claims, **characterized in that** the armature pipe (30) is of movable, in particular pivotable, design and has a joint (33), in particular a rotary bearing, and preferably a handle (34).

13. Kitchen fitting according to one of the preceding claims, **characterized in that** a fluid valve (37) and/or a distributor (38) for several fluids are/is arranged in the fitting pipe (30), in particular in a conical widened portion (39) of the fitting pipe (30).

14. Kitchen fitting according to one of the preceding claims, **characterized in that** the fluid supply (3) has a conveying device (44) with one or more fluid lines (36) and one or more exchangeable fluid containers (43) for further fluids, in particular detergent, disinfectant, skin care lotion or the like.

15. Kitchen device comprising a kitchen sink (45) and comprising a kitchen fitting (1) which is arranged at the sink edge (46) and has an outlet fitting (2) and a fluid supply (3) for one or more fluids and also an operator control device (5) with a controller (6) and with one or more operator control elements (7-11) connected to said controller, **characterized in that** the kitchen fitting (1) is designed according to at least one of Claims 1 to 14.

## Revendications

1. Robinet de cuisine, comprenant un robinet d'écoulement (2) et une alimentation en fluide (3) pour un ou plusieurs fluides, et un dispositif d'actionnement (5) qui présente une commande (6) et un ou plusieurs éléments d'actionnement (7 à 11) reliés à celle-ci, un élément d'actionnement (7) étant réalisé sous la forme d'un commutateur marche/arrêt sans contact pour un flux de fluide (47), le commutateur marche/arrêt sans contact (7) activant le flux de fluide (47) lors d'un actionnement et désactivant à nouveau le flux de fluide lors d'un nouvel actionnement, le commutateur marche/arrêt sans contact (7) étant réalisé sous la forme d'un capteur optique (13) pouvant être actionné manuellement et sans contact, le commutateur marche/arrêt sans contact (7) étant disposé sur la face supérieure d'une tête de robinet (31) à l'extrémité supérieure libre d'un tuyau de robinet (30) du robinet d'écoulement (2), le commutateur marche/arrêt sans contact (7) présentant une zone effective (15) dirigée vers le haut, le capteur optique (13) présentant un recouvrement (16) réduisant l'incidence de lumière extérieure, et la commande (6) présentant un programme pour faire la différence entre la lumière de capteur et la lumière parasite,
**caractérisé en ce que** l'élément d'actionnement (7) est réalisé sous la forme d'un commutateur marche/arrêt sans contact pour un flux d'eau s'écoulant du robinet de cuisine (1) .

2. Robinet de cuisine selon la revendication 1, **caractérisé en ce que** le commutateur marche/arrêt sans contact (7) est réalisé sous la forme d'un détecteur photoélectrique à réflexion directe infrarouge ou d'un commutateur à impulsion.

3. Robinet de cuisine selon la revendication 1 ou 2, **caractérisé en ce que** le dispositif d'actionnement (5) présente un ou plusieurs autres éléments d'actionnement sans contact (8, 9, 10) pour influencer un ou plusieurs fluides.

4. Robinet de cuisine selon la revendication 3, **caractérisé en ce que** les un ou plusieurs autres éléments d'actionnement sans contact (8, 9, 10) sont réalisés sous forme de régulateurs de température et/ou de sélecteurs de mode pour un autre fluide.

5. Robinet de cuisine selon la revendication 3 ou 4, **caractérisé en ce que** le commutateur marche/arrêt sans contact (7) et les un ou plusieurs autres éléments d'actionnement sans contact (8, 9, 10) sont regroupés en un dispositif capteur (12) et sont disposés ensemble sur la tête de robinet (31).

6. Robinet de cuisine selon la revendication 3, 4 ou 5, **caractérisé en ce que** le commutateur marche/arrêt sans contact (7) et les un ou plusieurs autres éléments d'actionnement sans contact (8, 9, 10) présentent des zones effectives (15) dirigées différemment.

7. Robinet de cuisine selon l'une quelconque des revendications précédentes, **caractérisé en ce que** le dispositif d'actionnement (5) présente un dispositif d'affichage (18) pourvu d'un élément d'affichage (19, 27) pour le commutateur marche/arrêt sans contact (7) et de préférence d'autres éléments d'affichage (20 à 27) pour les un ou plusieurs autres éléments d'actionnement sans contact (8, 9, 10).

8. Robinet de cuisine selon la revendication 7, **caractérisé en ce que** l'élément d'affichage (19) affiche pour le commutateur marche/arrêt sans contact (7) la position et la fonction de celui-ci, et un élément d'affichage (27) fournit un signal d'acquittement pour l'actionnement effectué du commutateur marche/arrêt sans contact (7).

9. Robinet de cuisine selon la revendication 5 et 7, **caractérisé en ce que** le dispositif capteur (12) et le dispositif d'affichage (18) sont disposés ensemble sur la tête de robinet (31).

10. Robinet de cuisine selon l'une quelconque des revendications précédentes, **caractérisé en ce qu'**un autre élément d'actionnement (11) est réalisé sous la forme d'un régulateur de débit servant à régler l'intensité du flux de fluide (47) commuté par le commutateur marche/arrêt sans contact (7).

11. Robinet de cuisine selon l'une quelconque des revendications précédentes, **caractérisé en ce que** sur la zone d'extrémité supérieure du tuyau de robinet (30), une ou plusieurs ouvertures d'écoulement (35) pour respectivement un fluide I, II, III sont disposées.

12. Robinet de cuisine selon l'une quelconque des revendications précédentes, **caractérisé en ce que** le tuyau de robinet (30) est réalisé de manière mobile, en particulier pivotante et présente une articulation (33), en particulier un palier pivotant, ainsi que de préférence une poignée (34).

13. Robinet de cuisine selon l'une quelconque des revendications précédentes, **caractérisé en ce qu'**une vanne de fluide (37) et/ou un distributeur (38) pour plusieurs fluides sont disposés dans le tuyau de robinet (30), en particulier dans un élargissement conique (39) du tuyau de robinet (30).

14. Robinet de cuisine selon l'une quelconque des revendications précédentes, **caractérisé en ce que** l'alimentation en fluide (3) présente un dispositif de refoulement (44) pourvu d'une ou de plusieurs conduites de fluide (36) et d'un ou de plusieurs réservoirs de fluide (43) échangeables pour d'autres fluides, en particulier des détergents, des désinfectants, des lotions de soin ou similaires.

15. Dispositif de cuisine comprenant un évier de cuisine (45) et un robinet de cuisine (1) disposé sur le bord de l'évier (46) et qui présente un robinet d'écoulement (2) et une alimentation en fluide (3) pour un ou plusieurs fluides ainsi qu'un dispositif d'actionnement (5) pourvu d'une commande (6) et d'un ou de plusieurs éléments d'actionnement (7 à 11) reliés à celle-ci, **caractérisé en ce que** le robinet de cuisine (1) est réalisé selon au moins l'une des revendications 1 à 14.
